# EUROPEAN PATENT SPECIFICATION

(11) **EP 3 171 319 B1**
(45) Date of publication and mention of the grant of the patent: **18.09.2019**
(21) Application number: 16200980.7
(22) Date of filing: 07.07.2015
(51) Int. Cl.: G06Q 20/36, G06K 19/06, G06Q 20/38, G06Q 20/32

(54) **SYSTEM AND METHOD FOR A BASEBAND NEARFIELD MAGNETIC STRIPE DATA TRANSMITTER**
SYSTEM UND VERFAHREN FÜR EINEN BASISBAND-NAHFELDMAGNETSTREIFEN-DATENSENDER
SYSTÈME ET PROCÉDÉ POUR UN ÉMETTEUR DE DONNÉES DE BANDE MAGNÉTIQUE DE CHAMP PROCHE EN BANDE DE BASE

(30) Priority: 11.07.2014 US 201414329130
(43) Date of publication of application: 24.05.2017
(62) Divisional of application: 15818818.5
(73) Proprietor: Samsung Electronics Co., Ltd., Suwon-si, Gyeonggi-do (KR)
(72) Inventor: WALLNER, George, Burlington, MA 01803 (US)
(74) Representative: HGF Limited

(56) References cited:
- US-A1- 2006 186 209
- US-A1- 2012 074 232
- US-B1- 8 376 239
- US-B1- 8 628 012
- US-B1- 8 690 059

## Description

### CROSS REFERENCE TO RELATED APPLICATION DATA

This application claims priority to U.S. Application No. 14/329, 130, filed on July 11, 2014 and published as US 2015/0235204, which is a continuation-in-part of U.S. Application No. 14/181,947, filed on February 17, 2014 and published as US 2014/0269946, which is a continuation-in-part of U.S. Application No. 13/826, 101, filed on March 14, 2013 and published as US 8,690,059, which claims priority from U.S. Provisional Application No. 61/754,608, filed on January 20, 2013.

### FIELD OF THE INVENTION

The present invention relates to a baseband nearfield magnetic stripe data transmitter and an associated apparatus, and in particular to a magnetic stripe data transmitter that transmits payment card data from a smartphone, or other electronic device, into a Point of Sale transaction terminal by pressing a payment button on the smartphone or on the magnetic stripe data transmitter.

### BACKGROUND OF THE INVENTION

Magnetic stripe payment cards carry a magnetic stripe that contains the payment card data. Magnetic stripe payment cards include credit, debit, gift, and coupon cards, among others. The data is "written" onto the magnetic stripe by alternating the orientation of the magnetic particles embedded into the stripe. Card data is read from the magnetic stripe at a Point of Sale (POS) by swiping the card through a magnetic stripe reader. The reader includes of a reader head and its associated decoding circuitry. When the card is swiped through the reader the magnetic stripe moves in front of the reader head. The moving magnetic stripe, which contains the alternating polarity magnetic domains, creates a fluctuating magnetic field within the narrow sensing aperture of the reader head. The reader head converts this fluctuating magnetic field into an equivalent electrical signal. The decoding circuitry amplifies and digitizes this electrical signal, recreating the same data stream that was originally written onto the magnetic stripe. The encoding of the magnetic stripe is described in the international standard ISO 781 1 and 7813.

With the increased popularity and capability of smartphones, there is a growing desire to use them as mobile wallets and to use them to make payments at the point of sale. The key impediment to adoption has been the lack of data transfer channel between mobile phones and the point of sale terminal. A number of alternatives have been proposed. These include the manual keying of data displayed on the phone's screen into POS terminal, 2D barcodes displayed on the phone's screen and read by a 2D barcode reader, RF ID tags attached to phones and built-in Near Field Communications (NFC) hardware driven by an application in the phone. Of these methods, 2D barcodes and NFC are the most promising. Their wide scale adoption, however, is prevented by a lack of suitable reading devices at the point of sale, and in the case of NFC, also the lack of standardized NFC capability in many smartphones.

Accordingly, there is a need for improved devices and methods for transmitting payment card data, or other information, from a smartphone, or other electronic device, remotely into a Point of Sale transaction terminal.

### SUMMARY OF THE INVENTION

The present disclosure describes a system and a method for a baseband near-field magnetic stripe data transmitter that transmits payment card data, or other information, from a smartphone, or other electronic device, remotely into a Point of Sale transaction terminal by pressing a payment button on the smartphone or on the magnetic stripe data transmitter.

According to one aspect the invention, there is provided an apparatus as set forth in the accompanying claim 1. Optional aspects are set out in dependent claims 2 to 12.

In US 8,628,012, there is disclosed a system and a method for a baseband near-field magnetic stripe data transmitter (MST) device that transmits payment card data from a smart-phone, or other electronic device, into a Point of Sale (POS) transaction terminal. The MST device includes a driver and an inductor. The MST receives magnetic stripe data comprising payment card data, processes the received magnetic stripe data and emits high energy magnetic pulses comprising the processed magnetic stripe data that are then received remotely by the magnetic stripe reader of the POS.

In US 8,523,059, there are disclosed advanced payment applications to improve the functionality of cards and devices. For example, a user interface may be placed on a card (e.g., a physical button) or a telephonic device (e.g., a virtual button on a capacitive touch screen). Manual input provided to this user interface may, for example, cause an item purchased on credit to be paid via one or more user accounts (e.g., bank accounts) as soon as the next credit statement posts or becomes due. A user may decide to pay for an item when the next statement becomes due at a point-of-sale magnetic stripe reader by using an interface on a card to cause information to be communicated through the infrastructure indicative of a user's desire to pay the for an item when the next statement becomes due.

In US 2012/074232, there is disclosed a universal card that can be used in place of all the other traditional cards which a person may want to carry. The universal card can include a short range communications transceiver to communicate with a mobile device. The mobile device can include a user interface and an e-wallet application so that the user can interface with the e-wallet application for programming the universal card via the short range communication link. Once programmed, the universal card emulates a function of a traditional card. A dynamic magnetic stripe emulates a traditional magnetic stripe, wherein individually inducible transducer coils positioned within a universal card are used to emulate the static magnets in a traditional magnetic stripe.

In US 2006/186209, there is disclosed an electronic transaction card that communicates with an add-on slot of an intelligent electronic device. The add-on slot may be a memory card slot. The intelligent electronic device may be a mobile phone or other device with or without network connectivity. The electronic transaction card may have magnetic field producing circuitry compatible with magnetic card readers, smartcard circuitry, other point-of-sale interfaces, or any combination thereof.

In US 8,376,239, there is disclosed a method of reading magnetic stripe card(s) into a database, selecting a specific card from the database, and outputting the data related to that specific card to existing merchant card reader equipment with no modification. A simulated magnetic stripe card can be tethered to a cell phone via the headset jacks. A more complex design uses an un-tethered, simulated magnetic stripe card by including BLUETOOTH (or other wireless) communications on the card. This dual purpose invention is intended to eliminate the need to carry multiple magnetic stripe cards in a wallet or purse by consolidating all of the individual card information into a form to be reproduced onto the simulation card when needed by the user. It can also be used at a merchant POS card reader to allow an existing MSD reader to be converted to use in wireless cell phone transactions e.g. BLUETOOTH or NFC.

### BRIEF DESCRIPTION OF THE DRAWINGS

Referring to the figures, wherein like numerals represent like parts throughout the several views:
FIG. 1 is an overview diagram of a baseband nearfield magnetic stripe data transmitter system;
FIG. 2 is a schematic diagram of a typical inductor used to generate the required magnetic field;
FIG. 3 is an overview diagram of another example of the baseband nearfield magnetic stripe data transmitter system;
FIG. 4 is an overview diagram of another baseband nearfield magnetic stripe data transmitter system;
FIG. 5 is a graphical representation of the inductor current versus time and the magnetic reader head output voltage versus time, for the system of FIG. 4;
FIG. 6 depicts an array of two inductors;
FIG. 7 depicts the inductor magnetic field; and
FIG. 8 is an overview diagram of an embodiment of the baseband nearfield magnetic stripe data transmitter system, according to this invention.

### DETAILED DESCRIPTION OF THE INVENTION

The present disclosure describes a system and a method for a baseband nearfield magnetic stripe data transmitter that transmits payment card data from a smartphone, or other electronic device, into a Point of Sale transaction terminal by pressing a payment button on the smartphone or on the magnetic stripe data transmitter.

Baseband Nearfield Magnetic Stripe Transmission (MST), the subject of this invention, uses a pulse modulated magnetic field to transmit from a distance data from a smartphone into a POS terminal. The system is able to transmit card data into the POS terminal's reader without it being in contact with, or in close proximity to (less than 1 mm), the reader head, or without the need to be inserted into the card reader slot. Furthermore, the system eliminates the need for the swiping motion required with magnetic stripe cards or prior-art magnetic stripe emulation or electronic magnetic stripes, as described by Narenda et al, in US 7,954,716.

The magnetic field is generated by a specially designed inductor, driven by a high power driver circuit. The inductor's unique structure results in a complex omnidirectional magnetic field that, from a distance, is able to penetrate the magnetic stripe reader head located in the POS terminal.

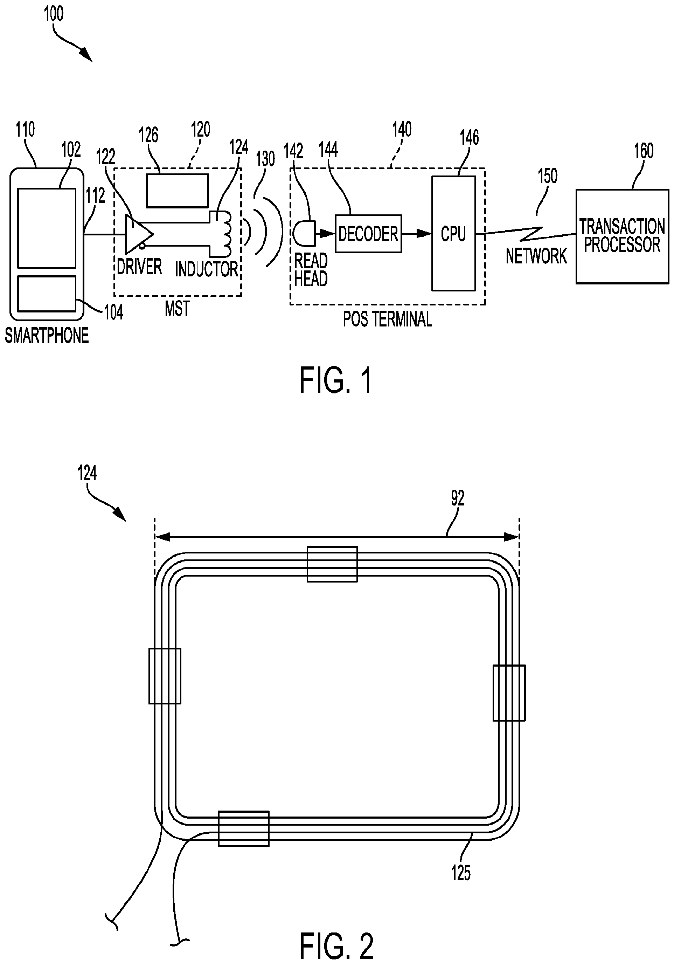

Referring to FIG. 2, inductor 124 includes one or more rectangular wire bundle(s) 125 of approximately 40x30 mm outside dimensions with a 3 mm bundle thickness. Inductor 124 has an inductance of such a value that properly timed current pulses reach their maximum value at the end of each pulse. Also, the ratio of inductance and winding resistance values is critical in shaping the current from the driver circuit to result in a magnetic field that closely resembles the magnetic signal seen by the magnetic reader head when a magnetic stripe card is swiped in front of it. In one example, the ratio of inductance to winding resistance is 80 µH/Ohm.

The physical shape of the inductor ensures that the magnetic flux lines are spread over a large enough area to include the sensing aperture of the reader head. The inductor windings may be enamel insulated magnet wire, or alternatively, the inductor may be implemented as a spiral inductor formed by conductor traces laid out on rigid or flexible printed circuit substrates.

Although the inductor is stationary, the inductor is driven by a series of timed current pulses that result in a series of magnetic pulses that resemble the fluctuating magnetic field created by a moving magnetic stripe. The modulation of the field follows the standard magnetic stripe encoding, which in turn results in a stream of electrical pulses on the reader's output that is identical to what would be obtained from a magnetic stripe.

The key benefit of MST is that it works with the existing infrastructure of point of sale card payment terminals. Unlike with NFC or 2D barcode, no external reader or new terminal has to be installed.

Referring to FIG. 1, a system 100 comprises a suitable driver 122 and inductor 124 contained in a small capsule 120, which is connected to the audio jack 112 of the phone 110. Smartphone 110 is loaded with a wallet software application 102. The phone 110 is connected to the Magstripe Transmitter 120 via its audio jack 1 12. To make a payment at a point of sale location equipped with a common card payment terminal capable of reading standard ISO/ABA magnetic stripe cards 140 the consumer selects the wallet application 102 on his smartphone 110 and selects one of the preloaded payment cards (i.e., Visa, MasterCard, Amex) he wants to use for the payment. He holds the phone close (2.5 to 5 cm (1 to 2 inches)) to the point of sale terminal 140 and presses the pay icon/key 104 on the phone 110. The wallet application 102 in the phone 110 sends to the MST 120 via the audio jack 112 a stream of pulses that contain the selected card's magnetic stripe data. The MST 120 amplifies, shapes and emits the pulses in the form of suitably modulated high energy magnetic impulses 130. The magnetic impulses 130 are picked up by the magstripe reader head 142 located in the point of sale payment terminal 140 and are converted into electrical pulses. The resulting electrical pulses are decoded by decoder 144 and processed by its central processing unit (CPU) 146, just like it would process a standard magnetic stripe card that was swiped through its reader slot. The merchant enters the payment amount and the transaction is sent by the POS terminal 140 via the network 150 to the payment transaction processor 160. The transaction processor 160 returns the transaction authorization and the POS terminal 140 prints a receipt. With the exception of the card entry method, the entire transaction is completed in the same manner as with a standard magnetic stripe card.

In another example of MST 120, security is improved by the smartphone supplementing the transaction transmitted through the payment terminal with a separate secure wireless message sent to the processor, where the two transactions are combined for the purposes of authentication.

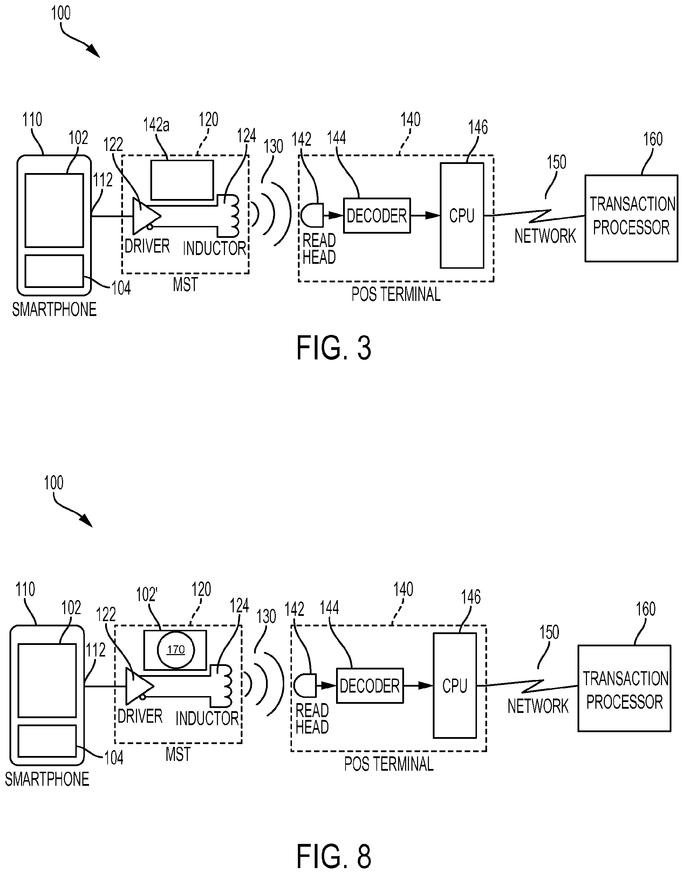

Referring to FIG. 3, in another example, the MST 120 is integrated with a magnetic stripe reader (MSR) head 142a, creating a single device able to both read and transmit magnetic stripe information. The combination of the MST and MSR in conjunction with an electronic wallet 102, provides a convenient and secure means of loading payment cards into an electronic wallet and the subsequent transmission of the payment card data to a POS system 140. Furthermore, this example allows convenient person to person payments using credit or debit cards, where each person is equipped with an MST and is able to transmit his card information into the other person's mobile phone with the card reader included in that person's MST.

In another example, magnetic stripe transmission is used to transmit tokenized card data to the point of sale terminal. In this example, the actual payment card number or part of it is substituted by a cryptographically generated token, which is formatted as track data, including token data formatted to resemble a standard Primary Account Number (PAN). The PAN may contain a valid Bank Identification Number (BIN). Such token is either downloaded from the card issuer, another online source, or is locally generated. The MST transmission of tokens replaces the transmission of valid card numbers by transmitting cryptographically generated tokens that are valid only for one transaction and thus eliminates the security risk inherent in the standard magnetic stripe, all without the need to change the existing point of sale hardware. In other example, more than one track data are transmitted in order to increase compatibility with existing point of sale hardware and software. In these examples, the transmission of Track 1 data may be followed by the transmission of Track 2 data, or Track 2 data may be followed by Track 1 data.

In a further example, the MST 120 also contains a secure microcontroller 126 which provides secure local storage of the card data and directly drives the inductor driver circuit 122. This example allows the MST to operate detached from the phone in a store- and-transmit mode. In some examples, the MST further includes volatile and nonvolatile memory for the secure storage of card data and other personal information.

Yet another possible implementation uses Bluetooth™ communications between the phone 110 and the MST 120, where two-way communications is used for enhanced security and flexibility, including the retrieval by the phone of card data stored in the secure element formed by the MST's secure microcontroller 126.

In yet another possible implementation the MST 120 uses its built-in secure microcontroller 126 to encrypt, either partially or fully, the card data and transmits it via the magnetic field to the point of sale card reader.

In yet another possible implementation the payment card data comprise card verification value (CW) data that are changed dynamically. In this case, the security of a transaction is improved due to the dynamic changing of the CW data.

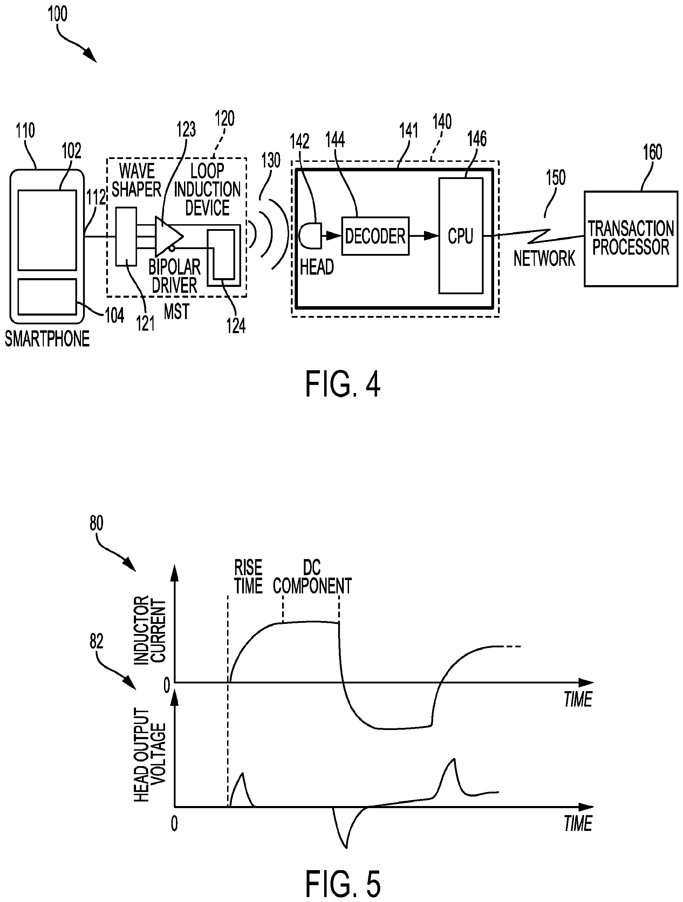

Referring to FIG. 4, another system 100 is disclosed, in which Magstripe Transmitter (MST) 120 includes a wave shaper 121, a bipolar driver 123 and a loop inductor 124. Smartphone 110 is loaded with a wallet software application 102, and is connected to the Magstripe Transmitter 120 via its audio jack 112. To make a payment at a point of sale location equipped with a common card payment terminal capable of reading standard ISO/ABA magnetic stripe cards 140, the consumer selects the wallet application 102 on his smartphone 110 and selects one of the pre-loaded payment cards (i.e., Visa, MasterCard, Amex) he wants to use for the payment. He holds the phone close ((2.5 to 5 cm 1 to 2 inches)) to the point of sale terminal 140 and presses the pay icon/key 104 on the phone 110. The wallet application 102 in the phone 110 sends to the MST 120 via the audio jack a stream of pulses that contain the selected card's magnetic stripe data. The MST 120 amplifies, shapes and emits the pulses in the form of suitably modulated high energy magnetic impulses 130. The magnetic impulses 130 are picked up by the magstripe reader head 142 located in the point of sale payment terminal 140 and are converted into electrical pulses. The resulting electrical pulses are decoded by decoder 144 and processed by its central processing unit (CPU) 146, just like it would process a standard magnetic stripe card that was swiped through its reader slot. The merchant enters the payment amount and the transaction is sent by the POS terminal 140 via the network 150 to the payment transaction processor 160. The transaction processor 160 returns the transaction authorization and the POS terminal 140 prints a receipt. With the exception of the card entry method, the entire transaction is completed in the same manner as with a standard magnetic stripe card.

The magnetic stripe reader-heads used in point of sale terminals are designed to be sensitive only to magnetic fields that originate close to and within their sensing aperture, which is located right in front of the head. They are designed to ignore external magnetic fields outside this sensing aperture. The intended pick-up distance is a fraction of an inch and the field of sensitivity is only a few degrees wide. Additionally, reader heads are surrounded by a metal shield 141 that greatly attenuates changing magnetic fields outside the head's intended sensing aperture, shown in FIG. 4. Further, the shield 141 is connected to the terminal's frame ground, which shunts to ground coupled common mode signals originating externally. These design features are aimed at ensuring that the head does not pick up noise from nearby electrical equipment, transmitters or cell-phones. These same design features also prevent remote induction of card data when using an ordinary inductor and pulses that resemble those generated by a moving magnetic stripe.

Accordingly, penetrating the shielding 141 of the reader-head from a distance longer than 13 mm (0.5 inches), and from most angles, requires special techniques, which are the subject of this disclosure. These techniques assure that the signal reaching the head's internal inductor is free of distortion and have the right shape and timings. In order to meet these requirements, the MST 120 pre-shapes the waves with the wave shaper 121 to compensate for the effects of the shielding, eddy currents and the limited inductance of the reader head 142. Referring to FIG. 5, a large DC component 81 is added to the inductor current 80 to compensate for the rapidly collapsing magnetic fields inside the head's 142 shielded enclosure 141 and the effects of the relatively low inductance of the reader-head winding. Additionally, the reader-head amplifier has limited bandwidth. To achieve sufficient induced signal amplitudes, the pulse rise times 82 is controlled to be between 10 and 60 microseconds. This ensures that that the pulse rise times fall within the bandwidth of the reader-head amplifier but not outside the timing constraints of the decoder circuit.

Furthermore, in order to achieve the required penetration from a distance larger than 13 mm (0.5 inches), a suitable driver 123 must deliver magnetic pulses having a large enough current, that exceeds 1 Ampere peak. Additionally, to create the right output on the reader-head, the current must be bipolar and must contain a large DC component, which is in excess of 40% of the peak current.

The inductive device 124 of the MST is specially designed to form a loosely coupled transformer, from a distance longer than 13 mm (0.5 inches), with the card reader-head 142, where the MST's inductor 124 is the primary and the reader-head's inductor is the secondary. Because the coupling between this primary and secondary is very loose, and because of the high losses caused by the head's shielding 141, as well as the losses caused by eddy currents, the current driving the inductor must be of a special level and shape. The magnetic field thus generated must be of a sufficient intensity that these losses are compensated for and sufficient signal is induced into the reader head's inductor.

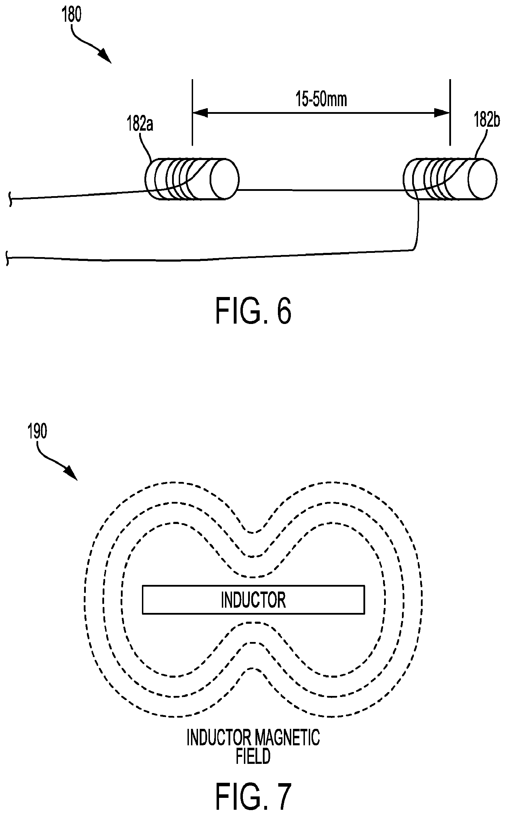

Therefore inductor 124 is designed to have a very specific set of characteristics to make it suitable for the transmission function. It has low enough winding resistance to allow the large current needed to generate the intense magnetic field. At the same time, it has sufficient inductance to control the rise time of the current pulses. The inductance required mandates a large number of turns (over 20), without increasing the winding resistance beyond 3 ohms. Concurrent with that, the inductor is shaped to provide a sufficiently well distributed magnetic field with few nulls, as shown in FIG. 7. Such an inductor is either a single inductor that encloses a large area (between 600 and 1700 square mm), shown in FIG. 2, or an array 180 of spatially distributed two or more inductors 182a, 182b covering the same area, shown in FIG. 6. The inductor (or inductors) may have either, iron or ferrite core(s), which is designed such as to not saturate under the high current driven through the inductor(s). In one example, the inductor 124 has a length 92 in the range between 15 mm to 50 mm. In another example, the MST 120 includes an array 180 of two inductors 182a, 182b separated by a distance in the range of 15 mm to 50 mm.

The traditional magnetic stripe data format does not contain features that protect it against copying. While the MST transmits the card data in a magnetic stripe format, the actual data transmitted does not have to be identical to the data contained in the magnetic stripe of the physical card.

The MST invention includes a secure transmission option where the card data is suitably modified by replacing part of the discretionary data field with a cryptographically generated dynamic element. This security data element, generated either in the phone or in the hardware of the MST, contains a secure hash which is generated using the card data, the MST ID and a sequence number that is incremented for each transmission, and encrypted by a Key supplied by either the card issuer of another third party. The issuer of the Key is able to calculate this secure hash, using the Key, and thus able to verify that a transaction has originated from a legitimate device using legitimate card data. Because the secure hash changes with every transaction in an unpredictable way, a fraudster (who does not know the Key) cannot calculate a valid hash for a new transaction. As each transaction contains a sequence number, the recipient is able to identify a replay. Also, because the secure hash replaces a crucial part of the original discretionary data field, data captured from an MST transaction is unsuitable for creating a valid counterfeit card.

By modifying only the part of the card data which is not used by the retailer and the acquirer, this scheme preserves compatibility with existing retail POS and acquirer processing system.

Referring to FIG. 8, in an embodiment of this invention 100, Magstripe Transmitter (MST) 120 further includes a payment button ("Button Pay") 170. Button Pay 170 is programmed to be associated with a specific pre-selected payment card that is stored in an electronic wallet. The electronic wallet 102 or 102' may be located in the mobile phone 110 or the MST 120, as shown in FIG. 8. Pressing the Button Pay 170 causes the data of the specific pre-selected payment card to be transmitted to the point of sale payment terminal 140. Accordingly, in order to make a payment at a point of sale location equipped with a common card payment terminal capable of reading standard ISO/ ABA magnetic stripe cards 140, the consumer presses the Button Pay 170 on the MST 120 and the system automatically selects the pre-programmed and pre-selected specific payment card that is associated with the Button Pay 170 and this causes the mobile phone 110 to send a stream of pulses that contain the pre-selected card's magnetic stripe data to the MST 120. The stream of pulses that contain the pre-selected card's magnetic stripe data are amplified, shaped and emitted by the MST in the form of suitably modulated high energy magnetic impulses 130. The magnetic impulses 130 are picked up by the mag-stripe reader head 142 located in the point of sale payment terminal 140 and are converted into electrical pulses. The resulting electrical pulses are decoded by decoder 144 and processed by its central processing unit (CPU) 146. The merchant enters the payment amount and the transaction is sent by the POS terminal 140 via the network 150 to the payment transaction processor 160. The transaction processor 160 returns the transaction authorization and the POS terminal 140 prints a receipt. Other embodiments include one or more of the following. Key 104 in the mobile phone 110 is programmed to be associated with a specific payment card and functions as a Button Pay. The user is notified by the mobile phone that the Button Pay was activated. The MST device is detached from the mobile phone and the Button Pay is remotely activated via the mobile phone's Bluetooth network.

Button Pay is very convenient to use because the consumer does not need to open the electronic wallet and select a card, or does not need to pull out the physical wallet and a card to present to the cashier. This convenience leads to changes in consumer behavior that could be very important to card issuers. Normally, with a physical or electronic wallet, the consumer has a relatively easy choice of pulling out or selecting one of a number of cards in his wallet, normally based on some "strategy" (Amex for entertainment, Visa for purchases, Visa debit for the groceries, etc.). Button Pay provides very convenient access to one card and therefore that card is used for everything. Button Pay changes the relatively level playing field offered by a conventional or electronic wallet in favor of one particular card. The average time for paying with the Button Pay is 3-4 seconds, whereas the average time for paying with a physical card is 17-22 seconds and the average time for paying with a card stored in an electronic wallet is 14-17 seconds.

Several examples and embodiments of the present invention have been described. Nevertheless, it will be understood that various modifications may be made without departing from the scope of the invention as defined by the accompanying claims.

## Claims

1. An apparatus (120) comprising:
a driver (122) configured to receive a stream of pulses associated with magnetic stripe data of a payment card and to cause a series of timed current pulses;
an inductor (124) having one or more windings (125) configured to emit magnetic pulses (130) based on the series of timed current pulses; and
a payment button (170) programmed to be associated with a pre-selected payment card,
wherein the inductor is configured to cause the series of timed current pulses for having a rising time, the one or more windings of the inductor to generate magnetic pulses contactlessly recognizable by a magnetic read head (142), and
**characterized in that** activating of the payment button automatically initiates emission of magnetic pulses comprising magnetic stripe data of the pre-selected payment card without user input to select the pre-selected payment card at a time of payment.

2. The apparatus of claim 1 wherein the windings (125) of the inductor (124) are formed on a planar substrate layer.

3. The apparatus of claim 1 wherein the inductor (124) comprises a plurality of loop windings (125) laid out on a printed circuit board substrate.

4. The apparatus of claim 3 wherein the loop windings (125) comprise rectangular wire bundles.

5. The apparatus of claim 1 wherein:
magnetic pulses (130), to be received by the magnetic read head (142), are emitted by the inductor (124) comprising transmission of a magnetic track's data.

6. The apparatus of claim 1 wherein:
the magnetic stripe data of the payment card comprise single track data, and
wherein magnetic pulses (130), to be received by the magnetic read head (142), emitted by the inductor (124) comprise transmission of data generated based on a cryptographically generated dynamic element replacing part of the single track data.

7. The apparatus of claim 1 wherein the driver (122) comprises a bipolar driver to generate bipolar current pulses exceeding 1 Ampere peak.

8. The apparatus of claim 1 wherein the driver (122) is configured to receive, via Bluetooth™ communication, the stream of pulses associated with magnetic stripe data of the payment card and to generate the series of timed current pulses.

9. The apparatus of claim 1 further comprising a controller (126) configured to execute a wallet application to select one of a plurality of payment cards based on a user input and to transmit, via Bluetooth™ communication, a stream of pulses associated with magnetic stripe data of the selected payment card,
wherein the driver (122) is configured to receive, via Bluetooth™ communication, the stream of pulses associated with magnetic stripe data of the selected payment card and to generate the series of timed current pulses, and
wherein the activating of the payment button (170) initiates emission of the magnetic pulses comprising magnetic stripe data of the pre-selected payment card without opening the wallet application at the time of payment.

10. The apparatus of claim 9 wherein the controller (126) is configured to encrypt payment card information using a token downloaded from a card issuer.

11. The apparatus of claim 9 wherein the controller (126) is configured to download information regarding a payment card from a card server, and to receive a key supplied by the card server for encrypting information regarding the payment card.

12. The apparatus of claim 10 wherein the controller (126) uses each token downloaded from the card issuer for only one magnetic stripe transmission transaction.

## Patentansprüche

1. Vorrichtung (120), umfassend:
einen Treiber (122), der konfiguriert ist, um einen Strom von Impulses in Verbindung mit Magnetstreifendaten einer Zahlungskarte zu empfangen und um eine Reihe von zeitgesteuerten Stromimpulsen zu bewirken;
einen Induktor (124), der eine oder mehrere Wicklungen (125) aufweist und der konfiguriert ist, um magnetische Impulse (130) basierend auf einer Reihe von zeitgesteuerten Stromimpulsen auszusenden; und
eine Zahlungsschaltfläche (170), die programmiert ist, um mit einer vorausgewählten Zahlungskarte verknüpft zu werden,
wobei der Induktor konfiguriert ist, um zu bewirken, dass die Reihe von zeitgesteuerten Stromimpulsen zeitlich ansteigend ist und die eine oder die mehreren Wicklungen des Induktors magnetische Impulse erzeugt/erzeugen, die kontaktlos von einem Magnetlesekopf (142) erkannt werden können, und
**dadurch gekennzeichnet, dass** das Aktivieren der Zahlungsschaltfläche automatisch das Aussenden magnetischer Impulse, die die Magnetstreifendaten der vorausgewählten Zahlungskarte umfassen, ohne Benutzereingabe zum Auswählen der vorausgewählten Zahlungskarte zu einem Zahlungszeitpunkt auslöst.

2. Vorrichtung nach Anspruch 1, wobei die Wicklungen (125) des Induktors (124) auf einer planaren Substratschicht hergestellt sind.

3. Vorrichtung nach Anspruch 1, wobei der Induktor (124) eine Vielzahl von Schleifenwicklungen (125) umfasst, die auf einem Leiterplattensubstrat angeordnet sind.

4. Vorrichtung nach Anspruch 3, wobei die Schleifenwicklungen (125) rechtwinklige Drahtbündel umfassen.

5. Vorrichtung nach Anspruch 1, wobei:
magnetische Impulse (130), die von dem Magnetlesekopf (142) empfangen werden sollen, von dem Induktor (124) ausgesendet werden, umfassend die Übertragung von Magnetspurdaten.

6. Vorrichtung nach Anspruch 1, wobei:
die Magnetstreifendaten der Zahlungskarte Einspurdaten umfassen, und
wobei magnetische Impulse (130), die von dem Magnetlesekopf (142) empfangen werden sollen und die vom Induktor (124) ausgesendet werden, die Übertragung von Daten, die basierend auf einem kryptografisch erzeugten dynamischen Element, das einen Teil der Einspurdaten ersetzt, erzeugt werden, umfassen.

7. Vorrichtung nach Anspruch 1, wobei der Treiber (122) einen bipolaren Treiber umfasst, um bipolare Stromimpulse zu erzeugen, die eine Spitze von 1 Ampere überschreiten.

8. Vorrichtung nach Anspruch 1, wobei der Treiber (122) konfiguriert ist, um über Bluetooth™-Kommunikation den Strom von Impulsen in Verbindung mit Magnetstreifendaten der Zahlungskarte zu empfangen und die Reihe von zeitgesteuerten Stromimpulsen zu erzeugen.

9. Vorrichtung nach Anspruch 1, ferner umfassend eine Steuerung (126), die konfiguriert ist, um eine Geldbörsenanwendung auszuführen, um eine aus einer Vielzahl von Zahlungskarten basierend auf einer Benutzereingabe auszuwählen und über Bluetooth™-Kommunikation einen Strom von Impulsen in Verbindung mit Magnetstreifendaten der ausgewählten Zahlungskarte zu übertragen.
wobei der Treiber (122) konfiguriert ist, um über Bluetooth™-Kommunikation den Strom von Impulsen in Verbindung mit Magnetstreifendaten der ausgewählten Zahlungskarte zu empfangen und die Reihe von zeitgesteuerten Impulsen zu erzeugen, und
wobei das Aktivieren der Zahlungsschaltfläche (170) das Aussenden der magnetischen Impulse, die die Magnetstreifendaten der vorausgewählten Zahlungskarte umfassen, ohne Öffnen der Geldbörsenanwendung zum Zeitpunkt der Zahlung auslöst.

10. Vorrichtung nach Anspruch 9 wobei die Steuerung (126) konfiguriert ist, um Zahlungskarteninformationen unter Verwendung eines Tokens, der von einem Kartenaussteller heruntergeladen wird, zu verschlüsseln.

11. Vorrichtung nach Anspruch 9, wobei die Steuerung (126) konfiguriert ist, um Informationen in Bezug auf eine Zahlungskarte von einem Karten-Server herunterzuladen und einen Schlüssel, der von dem Karten-Server bereitgestellt wird, zum Verschlüsseln von Informationen in Bezug auf die Zahlungskarte zu empfangen.

12. Vorrichtung nach Anspruch 10, wobei die Steuerung (126) jeden Token, der von dem Kartenaussteller heruntergeladen wird, nur für eine Transaktion der Magnetstreifenübertragung verwendet.

## Revendications

1. Appareil (120) comprenant :
un pilote (122) configuré pour recevoir un train d'impulsions associé avec des données d'une bande magnétique d'une carte de paiement, et pour déclencher une série d'impulsions de courant cadencées ;
un inducteur (124) possédant un ou plusieurs enroulements (125) configurés pour émettre des impulsions magnétiques (130) basées sur la série d'impulsions de courant cadencées ; et
un bouton de paiement (170) programmé pour être associé à une carte de paiement présélectionnée,
l'inducteur étant configuré pour déterminer, pour la série d'impulsions de courant cadencées, un temps de montée, l'un ou plusieurs enroulements de l'inducteur générant des impulsions magnétiques reconnaissables sans contact par une tête de lecture magnétique (142), et
**caractérisé en ce que** l'activation du bouton de paiement déclenche automatiquement l'émission d'impulsions magnétiques comprenant des données de bande magnétique de la carte de paiement présélectionnée sans entrée par l'utilisateur pour sélectionner la carte de paiement présélectionnée au moment du paiement.

2. Appareil selon la revendication 1, les enroulements (125) de l'inducteur (124) étant formés sur une couche de substrat plane.

3. Appareil selon la revendication 1, l'inducteur (124) comprenant une pluralité d'enroulements en boucle (125) disposés sur le substrat d'une carte de circuit imprimé.

4. Appareil selon la revendication 3, les enroulements en boucle (125) comprenant des faisceaux de fil rectangulaires.

5. Appareil selon la revendication 1, dans lequel :
des impulsions magnétiques (130), devant être reçues par la tête de lecture magnétique (142), sont émises par l'inducteur (124) comprenant la transmission de données d'une piste magnétique.

6. Appareil selon la revendication 1, dans lequel :
les données de la bande magnétique de la carte de paiement comprenant des données sur piste unique, et
les impulsions magnétiques (130), devant être reçues par la tête de lecture magnétique (142), émises par l'inducteur (124) comprenant la transmission de données de données générées basées sur un élément dynamique produit par cryptographie, remplaçant une partie des données sur piste unique.

7. Appareil selon la revendication 1, le pilote (122) comprenant un pilote bipolaire pour générer des impulsions de courant bipolaires dépassant 1 Ampère crête.

8. Appareil selon la revendication 1, le pilote (122) étant configuré pour recevoir, par communication Bluetooth™, le train d'impulsions associé avec des données d'une bande magnétique d'une carte de paiement, et pour déclencher la série d'impulsions de courant cadencées.

9. Appareil selon la revendication 1, comprenant en outre un contrôleur (126) configuré pour exécuter une application de portefeuille pour la sélection, parmi une pluralité de cartes de paiement, d'une carte basée sur une entrée utilisateur, et transmettre, par communication Bluetooth™, un train d'impulsions associé avec des données d'une bande magnétique de la carte de paiement sélectionnée,
le pilote (122) étant configuré pour recevoir, par communication Bluetooth™, le train d'impulsions associé avec des données d'une bande magnétique de la carte de paiement sélectionnée, et pour déclencher la série d'impulsions de courant cadencées et
l'activation du bouton de paiement (170) déclenchant l'émission des impulsions magnétiques comprenant des données de la bande magnétique de la carte de paiement présélectionnée sans ouverture de l'application de portefeuille au moment du paiement.

10. Appareil selon la revendication 9, le contrôleur (126) étant configuré pour crypter les informations de la carte de paiement à l'aide d'un jeton téléchargé de l'émetteur de la carte.

11. Appareil selon la revendication 9, le contrôleur (126) étant configuré pour télécharger, d'un serveur de carte, des informations concernant une carte de paiement, et pour recevoir une clé fournie par le serveur de carte pour le cryptage d'informations concernant la carte de paiement.

12. Appareil selon la revendication 10, le contrôleur (126) utilisant chaque clé téléchargée de l'émetteur de la carte pour une seule transaction de transmission par bande magnétique.
